# EUROPÄISCHE PATENTSCHRIFT

(11) **EP 1 178 229 B1**
(45) Veröffentlichungstag und Bekanntmachung des Hinweises auf die Patenterteilung: **16.03.2005**
(21) Anmeldenummer: 01114279.1
(22) Anmeldetag: 13.06.2001
(51) Int. Cl.: F16C 33/08, F16C 9/04

(54) **Verfahren zur Anordnung einer Lagerbuchse in einem geschmiedeten Stahl-Pleuel für Brennkraftmaschinen**
Method of arranging a bearing bushing in a forged connecting-rod of steel for a combustion engine
Procédé pour la disposition d'un coussinet dans une bielle d'acier forgée pour moteurs a combustion interne

(30) Priorität: 04.08.2000 DE 10037999
(43) Veröffentlichungstag der Anmeldung: 06.02.2002
(73) Patentinhaber: Bayerische Motoren Werke Aktiengesellschaft, 80809 München (DE)
(72) Erfinder: Luchner, Clemens, 85598 Baldham (DE); Pöllath, Helmut, 82223 Eichenau (DE); Mittrach, Jürgen, 85622 Feldkirchen (DE)

(56) Entgegenhaltungen:
- DE-A- 4 315 392
- DE-C- 658 929
- GB-A- 711 123

## Beschreibung

Die Erfindung bezieht sich auf ein Verfahren zur Anordnung einer Lagerbuchse in einem geschmiedeten Stahl-Pleuel für Brennkraftmaschinen.

Ein solches Verfahren, bei welchem eine Lagerdurchbrechung durch lochen erzeugt wird, und anschließend in der Largerdurchbrechung eine aus einem largerwerkstoff gebildete Lagerbuchse angeordnet wird, ist aus der GB-A-711 123 bekannt.

Aus dem deutschen Patent DE-PS 658 929 ist es bekannt, eine Lagerbuchse in einer Lagerdurchbrechung eines Pleuels mittels Löten zu fixieren.

Es ist weiter für hochbelastete Schmiedeteile aus Stahl bekannt, zur Steigerung von Zähigkeit und Festigkeit durch Gefügeumwandlung derartige Schmiedeteile nach dem Schmieden an der Atmosphäre relativ langsam abkühlen zu lassen.

Der Erfindung liegt daher die Aufgabe zu Grunde, für ein Pleuel aus einem derart behandelten Stahl eine Anordnung einer Lagerbuchse aufzuzeigen ohne nachteilige Gefügebeinträchtigung.

Die erfindungsgemäße Lösung dieser Aufgabe ist, dass bei einem Verfahren der eingangs genannten Art in einem schmiedeheissen Stahl-Pleuel von ≥ 900° C eine Lagerdurchbrechung durch Lochen mittels eines einzugig über die Lagerbreite wirkenden Lochstempels erzeugt wird und dass anschließend in der schmiedeheissen Lagerdurchbrechung eine aus einem Lagerwerkstoff gebildete Lagerbuchse angeordnet wird.

Mit der Erfindung ist in vorteilhafter Weise ein kostengünstiger Herstellprozess durch Entfall von mechanischen Bearbeitungsschritten ohne Beeinträchtigung der Werkstofffestigkeit, insbesondere bei mikrolegierten, wenig Kohlenstoff enthaltenden oder ausscheidungsgehärteten Stählen erzielt.

Um die Lagerbuchse in vorteilhafter Weise bei hohem Temperaturniveau des Pleuels in dessen Lagerdurchbrechung einsetzen zu können, wird in Ausgestaltung der Erfindung vorgeschlagen, dass in einer mehrteiligen Lochvorrichtung dem Lochstempel benachbart koaxial zugeordnet eine Lagerbuchse bevorratet wird, die unmittelbar anschließend an die Lochung der Lagerdurchbrechung in diese über dem Lochstempel eingesetzt wird.

Bei besonders hohem Temperaturniveau des Stahl-Pleuels kann die Lagerbuchse auch in einer von der Lochung gesonderten Station in der Lagerdurchbrechung angeordnet werden.

In weiterer Ausgestaltung der Erfindung wird vorgeschlagen, dass das Lochen und Einsetzen der Lagerbuchse unter einer Schutzgasatmosphäre betrieben wird zur Vermeidung oxidierter Flächen.

Für das erfindungsgemäße Verfahren wird bevorzugt eine aus einem kupferbasiertem Lagerwerkstoff gebildete Lagerbuchse mit blanker Aussenumfangsfläche verwendet, womit eine Diffusionsbindung bis hin zu einer Lötbindung begünstigt wird.

Zur Verstärkung diese Effektes kann die Lagerbuchse aussenumfänglich auch mit einer Lotschicht versehen werden.

Das erfindungsgemäße Verfahren wird im Folgenden beschrieben.

Für ein geschmiedetes Pleuel für Brennkraftmaschinen aus einem mikrolegierten, niedrig gekohltem Stahl oder einem ausscheidungsgehärtetem Stahl wird ein Verfahren zur Anordnung einer Lagerbuchse ohne Beeinträchtigung des Gefüges des Stahl-Pleuels vorgeschlagen. Hierbei wird das Stahl-Pleuel unmittelbar nach dem Schmieden in eine Matrize verbracht und in dem schmiedeheissen Stahl-Pleuel von gleich/ größer 900 Grad Celsius eine Lagerdurchbrechung insbesondere im großen Pleuel-Lager durch Lochen mittels eines in einem Zug über die Lagerbreite stanzenden Lochstempels erzeugt, wobei anschließend in der schmiedeheissen Lagerdurchbrechung eine aus einem Lagerwerkstoff gebildete Lagerbuchse angeordnet wird.

Um die Lagerbuchse bei höchstmöglichem Temperaturniveau nach dem Lochen anordnen zu können, wird die Lagerbuchse in einer mehrteiligen Lochvorrichtung einem kuppelbar ausgebildeten Lochstempel benachbart koaxial zugeordnet bevor ratet, um unmittelbar anschließend an die Lochung der Lagerdurchbrechung in Fortsetzung der einzugigen Stanzbewegung des Lochstempels in die Lagerdurchbrechung eingesetzt zu werden.

Bei besonders hohem Temperaturniveau des Stahl-Pleuels kann das Fügen der Lagerbuchse auch in einer von der Lochung gesonderten Station erfolgen, wobei ggf. eine Feinlochung vorausgeht.

Um eine Verzunderung bzw. Oxidation der miteinander zusammenwirkenden Flächen der Teile sicher zu vermeiden, wird das Lochen der Lagerdurchbrechung im Pleuel sowie das Einsetzten der Lagerbuchse in die Lagerdurchbrechung unter einer Schutzgasatmosphäre betrieben.

Für die verfahrensgemäße Anordnung wird vorzugsweise eine aus einem kupferbasiertem Lagerwerkstoff gebildete Lagerbuchse verwendet mit blanker Aussenumfangsfläche zur Ausbildung einer Diffusions- bis Lötbindung. Diese wird vorteilhaft dadurch unterstützt, dass die Lagerbuchse aussenumfänglich mit einer Lotschicht versehen wird.

## Patentansprüche

1. Verfahren zur Anordnung einer Lagerbuchse in einem geschmiedeten Stahl-Pleuel für Brennkraftmaschinen, bei welchem
- in einem schmiedeheissen Stahl-Pleuel von ≥ 900° C eine Lagerdurchbrechung durch Lochen mittels eines einzugig über die Lagerbreite wirkenden Lochstempels erzeugt wird, und
- anschließend in der schmiedeheissen Lagerdurchbrechung eine aus einem Lagerwerkstoff gebildete Lagerbuchse angeordnet wird.

2. Verfahren nach Anspruch 1, bei welchem
- in einer mehrteiligen Lochvorrichtung einem kuppelbar ausgebildeten Lochstempel benachbart koaxial zugeordnet eine Lagerbuchse bevorratet wird, die
- unmittelbar anschließend an die Lochung der Lagerdurchbrechung in diese eingesetzt wird.

3. Verfahren nach Anspruch 1, bei welchem das Fügen der Lagerbuchse in einer von der Lochung gesonderten Station erfolgt, wobei
- ggf. eine Feinlochung vorausgeht.

4. Verfahren nach den Ansprüchen 1 bis 3, bei welchem
das Lochen und Einsetzen der Lagerbuchse unter einer Schutzgasatmosphäre betrieben wird.

5. Verfahren nach einem der Ansprüchen 1 bis 4, bei welchem
eine aus einem Cu-basiertem Lagerwerkstoff gebildete Lagerbuchse mit blanker Aussenumfangsfläche verwendet wird.

6. Verfahren nach Anspruch 5, bei welchem
die Lagerbuchse aussenumfänglich mit einer Lotschicht versehen wird.

## Claims

1. A method for arranging a bearing bush in a forged steel connecting rod for internal-combustion engines, wherein
- bearing opening is produced in a steel connecting rod forge-heated to 900 C by punching by means of a piercing punch acting in a single pass over the bearing width , and
- bearing bush formed from a bearing material is then arranged in the forge-heated bearing opening.

2. A method according to claim 1, wherein
- bearing bush is stored associated coaxially adjacent with a piercing punch designed to be couplable in a multi-part punch device, the bearing bush
- being inserted in the bearing opening, directly following the punching.

3. A method according to claim 1, wherein
- the joining of the bearing bush takes place in a station which is separate from the punching, wherein
- fine punching is optionally carried out in advance.

4. A method according to claims 1 to 3, wherein the punching and insertion of the bearing bush take place in a protective gas atmosphere.

5. A method according to any one of claims 1 to 4, wherein a bearing bush formed from a Cu-based bearing material and having a bare external peripheral face is used.

6. A method according to claim 5, wherein the bearing bush is provided with a solder layer at the external periphery.

## Revendications

1. Procédé de disposition d'un coussinet dans une bielle d'acier forgée pour moteurs à combustion interne,
selon lequel
- on réalise un passage de palier dans une bielle d'acier chaude par forgeage de ≥ 900°C par perçage à l'aide d'un poinçon agissant d'une seule passe sur la largeur du coussinet et
- on introduit ensuite un coussinet formé en alliage antifriction dans le passage de palier chaud par forgeage.

2. Procédé selon la revendication 1,
selon lequel
- on approvisionne un coussinet dans un dispositif de perçage en plusieurs parties associé coaxialement à un poinçon voisin formé de manière à pouvoir être couplé,
- lequel coussinet est ensuite introduit directement dans le trou du passage de palier.

3. Procédé selon la revendication 1,
selon lequel
- l'assemblage du coussinet a lieu dans un poste séparé de celui du perçage, et
- une perforation fine a lieu auparavant le cas échéant.

4. Procédé selon les revendications 1 à 3,
selon lequel
le perçage et la mise en place du coussinet sont réalisées sous atmosphère contrôlée.

5. Procédé selon l'une quelconque des revendications 1 à 4,
selon lequel
un coussinet en alliage antifriction à base Cu est utilisé avec une surface périphérique extérieure dénudée.

6. Procédé selon la revendication 5,
selon lequel
le coussinet est utilisé avec une couche de brasage à sa périphérie extérieure.
